# EUROPEAN PATENT APPLICATION

(11) **EP 2 090 460 A1**
(43) Date of publication of application: **19.08.2009**
(21) Application number: 08151382.2
(22) Date of filing: 13.02.2008
(51) Int. Cl.: B60N 2/44

(54) **Seat with occupancy detecting system**

(71) Applicant: IEE INTERNATIONAL ELECTRONICS & ENGINEERING S.A., 6468 Echternach (LU)
(72) Inventor: Serban, Bogdan, 3376, Leudelange (LU); Boyer, Philippe, 57570, Boust (FR); Bar, Johann, 57480 Haute-Sierck (FR); Hoyer, David, 54441 Ayl (DE)
(74) Representative: Office Freylinger

(57) **Abstract**

A seat is disclosed including a seating portion and a backrest and an occupancy detection system associated to said seat. The occupancy detection system comprises at least one sensing electrode arranged in said seating portion or said backrest and a control and evaluation circuit operatively coupled to said sensing electrode, said control and evaluation circuit for determining a parameter indicative of the capacitance of said sensing electrode with respect to the surroundings of said electrode, said capacitance being responsive to the presence of absence of an occupant sitting on the seat. According to the invention, said control and evaluation circuit comprises a voltage supply for providing a predetermined supply voltage, at least one reference capacitor having a first terminal and a second terminal, said first terminal being operatively coupled to ground potential; a controlled switching arrangement, said switching arrangement being arranged for connecting the at least one electrode alternately to said voltage supply and to the second terminal of said reference capacitor, and an evaluation unit configured and arranged for determining a parameter representative of the charging behaviour of the reference capacitor.

## Description

### Technical field

The present invention generally relates to the detection of the occupancy state of a seat, in particular using a capacitive detection system. The present invention may e.g. be used in an automotive vehicle in order to detect the occupancy status of one or more vehicle seats. The present invention may also be used in other non-automotive applications, in which the occupancy status of a seat or the like may be of interest.

### Background Art

As used herein, a capacitive occupant detection system refers to a capacitive sensor adapted for detecting the occupancy state of a seat. A capacitive sensor, also called electric field sensor or proximity sensor, designates a sensor, which generates a signal responsive to the influence of what is being sensed (a person, a part of a person's body, a pet, an object, etc.) upon an electric field. A capacitive sensor generally comprises at least one electrode, to which is applied an oscillating electric signal and which thereupon emits an electric field into a region of space proximate to the electrode, while the sensor is operating. The sensor comprises at least one sensing electrode - which could comprise the same electrode or electrodes, to which the oscillating electric signal is applied - at which the influence of an object or living being on the electric field is detected.

The technical paper entitled "Electric Field Sensing for Graphical Interfaces" by J. R. Smith, published in Computer Graphics I/O Devices, Issue May/June 1998, pp 54-60 describes the concept of electric field sensing as used for making non-contact three-dimensional position measurements, and more particularly for sensing the position of a human hand for purposes of providing three dimensional positional inputs to a computer. Within the general concept of capacitive sensing, the author distinguishes between distinct mechanisms he refers to as "loading mode", "shunt mode", and "transmit mode" which correspond to various possible electric current pathways. In the "loading mode", an oscillating voltage signal is applied to a transmit electrode, which builds up an oscillating electric field to ground. The object to be sensed modifies the capacitance between the transmit electrode and ground. In the "shunt mode", an oscillating voltage signal is applied to the transmit electrode, building up an electric field to a receive electrode, and the displacement current induced at the receive electrode is measured, whereby the displacement current may be modified by the body being sensed. In the "transmit mode", the transmit electrode is put in contact with the user's body, which then becomes a transmitter relative to a receiver, either by direct electrical connection or via capacitive coupling. "Shunt mode" is alternatively referred to as "coupling mode".

Capacitive occupant sensing systems have been proposed in great variety, e.g. for controlling the deployment of one or more airbags, such as e.g. a driver airbag, a passenger airbag and/or a side airbag. US patent 6,161,070, to Jinno et al., relates to a passenger detection system including a single antenna electrode mounted on a surface of a passenger seat in an automobile. An oscillator applies on periodic oscillating voltage signal to the antenna electrode, whereby a minute electric field is produced around the antenna electrode. Jinno proposes detecting the presence or absence of a passenger in the seat based on the amplitude and the phase of the current flowing to the antenna electrode.

One disadvantage related to the capacitive sensing system described by Jinno is the requirement for a relatively large antenna electrode which makes integration of the antenna electrode into the seat more difficult. Furthermore, the electric field generated by the periodic oscillating voltage signal, e.g. at 100 kHz, may interfere with other electronic systems in the vehicle or more generally in the vicinity of the detection system and thus cause problems for EMC/EMI compliance of the detection system.

### Technical problem

It is therefore an object of the present invention to provide a seat with an improved system for detecting an occupancy state of said seat.

### General Description of the Invention

In order to overcome at least one of the above-mentioned problems, the present invention proposes a seat including a seating portion and a backrest and an occupancy detection system associated to said seat. The occupancy detection system comprises at least one sensing electrode arranged in said seating portion or said backrest and a control and evaluation circuit operatively coupled to said sensing electrode, said control and evaluation circuit for determining a parameter indicative of the capacitance of said sensing electrode with respect to the surroundings of said electrode, said capacitance being responsive to the presence of absence of an occupant sitting on the seat. According to the invention, said control and evaluation circuit comprises a voltage supply for providing a predetermined supply voltage, at least one reference capacitor having a first terminal and a second terminal, said first terminal being operatively coupled to ground potential; a controlled switching arrangement, said switching arrangement being arranged for connecting the at least one electrode alternately to said voltage supply and to the second terminal of said reference capacitor, and an evaluation unit configured and arranged for determining a parameter representative of the charging behaviour of the reference capacitor.

With the occupancy sensing device of the present invention, the capacitance of the at least one sensing electrode is determined by the repeated charging of the capacitance C_{X} to be determined to the supply voltage V_{S} and the subsequent discharging to the reference capacitor C_{REF}. The switching operation arrangement is operated in such a manner, that the reference capacitor is never directly connected to the supply voltage V_{S}. In each switching cycle, the capacitance C_{X} to be determined is charged to the supply voltage V_{S} and thus inputs a charge Q_{X}=V_{S}*C_{X} into the system. After the sensing electrode is disconnected from the supply voltage and connected to the second terminal of the reference capacitor, this charge Q_{X} is partially transferred to the reference capacitor, the portion of the charge to be transferred depending on the value of capacitance C_{X}. Due to the accumulation of charge on the reference capacitor, the voltage at the second terminal of the reference capacitor increases by an amount, which is depending on the quantity of charge transferred and thus again on the value of the capacitance C_{X} to be determined. It follows that the charging behaviour of the reference capacitor is directly influenced by the capacitance C_{X} to be determined; a larger capacitance C_{X} resulting in a faster charging of the reference capacitor. It follows that by determining a parameter, which is representative of the charging behaviour of the reference capacitor, the occupancy detection system will be able to distinguish between an empty seat and a seat occupied by a person.

The parameter representative of the charging behaviour of the reference capacitor may e.g. be the number of switching cycles of said controlled switching arrangement which is required in order to charge said reference capacitor to a predetermined threshold voltage. In this case, the above-described operation is repeated until the voltage at the second terminal of the reference capacitor is equal to the predetermined threshold voltage. It will be easily verified by the skilled person, that the number of switching cycles, which is required for the voltage at the second terminal of the reference capacitor to reach the threshold voltage is depending on the value of the capacitance to be determined and may thus be used by a processor unit for determining the capacitance of the sensing electrode or for discriminating between an occupied seat and an empty seat.

Another parameter representative of the charging behaviour of the reference capacitor may be the rate at which the voltage at the second terminal of the reference capacitor increases or the voltage at the second terminal of the reference capacitor after a specific number of switching cycles or after a specific time period.

In contrast to the state of the art capacitive occupancy detectors, in which the capacitive coupling of an antenna electrode to a passenger is directly determined by measuring the current flowing into the electrode, the present invention relies upon a repetitive transfer of charges between the capacitance to be determined and a known reference capacitance. Due to this repeated charge transfer, the system of the present invention is able to detect very small capacitance variations with sufficient accuracy using very simple and consequently low cost evaluation circuitry. As a result, the present invention enables detection of seat occupancy with sensing electrodes having a substantially reduced dimension when compared to the classical capacitive detection systems, in which the electrode antennas preferably covered the entire seating surface of the seat. The present invention thus enables the use of very small sensing electrodes, which can be easily integrated into the seat cushion or the backrest without impairing the comfort of the seat for the occupant. The present invention thus provides for a very low cost capacitive detection system, which furthermore makes integration into the seat much easier.

It will be noted, that due to its simple construction and the resulting small dimensions the control and evaluation circuit can easily be arranged and integrated into the seat. It will however be understood that this control and evaluation circuit may also be arranged at any suitable location outside the seat.

In a preferred embodiment of the invention, said evaluation unit comprises at least one comparator, said comparator for comparing the voltage at the second terminal of said reference capacitor with said predetermined threshold voltage and for issuing a signal indicative of the result of said comparison. When the voltage V_{CREF} at the second terminal of the reference capacitor C_{REF} reaches the comparator reference voltage V_{REF}, the comparator toggles and this change in the comparator output may trigger i.a. the determination of the capacitance value in an associated decision circuit.

In a further preferred embodiment, the evaluation unit further comprises a delay block, which is controlled by a clocked signal, and which is operatively connected at the output of the comparator. A delay block is an electronic circuit element, which may change its output state only if the clocked signal at a corresponding clock input changes. Accordingly, if the input data signal changes e.g. from "high" to "low", the delay block maintains its output state until the next change in the clock signal and thus operates as a latch. The delay block makes comparator operation synchronized to the clock signal and thus triggers i.a. the determination of the capacitance value or the occupancy state in the associated decision circuit.

In order to reset the system and to enable continuous operation of the system, the control and evaluation circuit further comprises circuit elements for the controlled discharging of said reference capacitor. These circuit elements may e.g. comprise a series arrangement of a resistor and a controlled switch which is connected across the reference capacitor. The switch may e.g. be controlled by the comparator or an associated electronic circuit to close after the voltage V_{CREF} at the second terminal of the reference capacitor C_{REF} has reached the comparator reference voltage V_{REF}. The voltage on the reference capacitor thus decreases and another detection cycle may restart.

In a preferred embodiment of the system, the controlled switch for discharging the reference capacitor is controlled by the delay block connected to the output of the comparator. In this embodiment, the switch is controlled to close after the voltage V_{CREF} at the second terminal of the reference capacitor C_{REF} has exceeded the comparator reference voltage V_{REF} and the delay block has been triggered by the corresponding clock signal. After the switch is closed, the voltage on the reference capacitor decreases until it has fallen below the comparator reference voltage V_{REF} and the delay block has been triggered by the corresponding clock signal. The controlling of the discharge switch by the delay block, which itself is controlled by a preferably low frequency clock signal, thus limits the minimum discharge switch on/off time.

It will be noted that in this embodiment, the discharge switch is not immediately closed after the voltage V_{CREF} at the second terminal of the reference capacitor C_{REF} reaches the comparator reference voltage V_{REF} but only after the subsequent clock pulse of the delay block clock, which triggers the delay block to invert its output. During the time interval between these two incidents, the voltage V_{CREF} at the second terminal of the reference capacitor C_{REF} continues to increase due to the continued operation of the controlled switching arrangement. At the time, the delay block is triggered and the discharge switch is closed, the voltage at the second terminal of the reference capacitor C_{REF} thus has reached a maximum value V_{CREF,max}, which depends on the charging behaviour of the reference capacitor and thus on the capacitance C_{X} to be determined.

As stated above, the voltage at the reference capacitor increases faster for larger capacitance C_{X}, so that V_{CREF,max} is larger for a high capacitance C_{X}. As a result, the time required for the reference capacitor to discharge to such an extend, that the voltage the second terminal of the reference capacitor C_{REF} falls below the comparator reference voltage V_{REF} is increased compared to the corresponding discharge time for small capacitance C_{X}. It follows, that the overall discharge time, i.e. the time interval between the closing of the discharge switch and the subsequent opening of the discharge switch, which corresponds to the time interval, during which the delay block output is "high", is directly depending on the capacitance C_{X} to be determined. It follows that the length of the overall discharge operation may be used as parameter for the discrimination between an empty seat and an occupied seat. On the other hand, in the case of a large capacitance C_{X} the time interval between two discharge operations is short since after the opening of the discharge switch, the voltage at the second terminal increases rapidly due to the operation of the controlled switching arrangement. In a preferred embodiment, the parameter used for the discrimination of occupancy is the ratio between the length of the discharging intervals and length of the charging interval, which is directly obtained by the duty cycle of the delay block output signal.

In a preferred embodiment of the invention, the controlled switching arrangement comprises at least one pseudo-random sequence generator, said pseudo-random sequence generator for generating a pseudo-random sequence for controlling the switching operation of said controlled switching arrangement. In this embodiment, the controlled switching operation does not operate at a fixed period clock source but at pseudo-random time intervals. As a result, the pseudo-random sequence generator provides spread-spectrum operation and ensures good immunity from external noise sources. In addition, designs with the spread-spectrum clock have lower electromagnetic emission levels, which substantially reduces the above mentioned problems for EMC/EMI of the detection system.

As already mentioned above, the system of the present invention does not require large area antenna electrodes but can operate with small easily integrateable sensing electrodes. In a preferred embodiment of the invention, said at least one sensing electrode is therefore a wire-based sensing electrode, i.e. said sensing electrode comprises of a simple electrode wire, which is connected to the control and evaluation circuit. Due to the reduced dimensions of the sensing electrode and the high sensitivity of the system, the at least one sensing electrode may be easily integrated at different locations into the seat. In a possible embodiment, the at least one sensing electrode may e.g. be integrated into the seating portion below the seating surface of the seat. This is the classical integration location for capacitive antenna electrodes. However, while the state of the art antenna electrodes extend substantially over the entire area of the seating surface, the reduced size sensing electrode of the present invention may be more specifically arranged in a location, in which a detection of a human occupant is more reliable. In a possible embodiment, a wire-based sensing electrode might e.g. be integrated in traverse direction in the front part of the seating surface. In this location, the occupancy sensor will be particularly sensitive to the thighs of an occupant sitting on the seat. In another embodiment, said at least one sensing electrode is arranged in said backrest of said seat, preferably in an upper portion of the backrest. In this location, the detection system is particularly sensitive to the thorax of an occupant, while being less sensitive to water or other liquids spilled on the seat or metallic objects placed onto the seat.

It will be appreciated, that in a further preferred embodiment of the invention, the occupancy detection system comprises at least one guard electrode, said at least one guard electrode being associated to said at least one sensing electrode, said at least one guard electrode being operatively coupled to the control and evaluation circuit. The guard electrode may e.g. be a sheet like electrode which is arranged behind the sensing electrode and which is operated in parallel to the sensing electrode by the control and evaluation unit. Additionally or alternatively a seat frame of said seat or a seat heater integrated in said seating portion or in said backrest of said seat is operatively coupled to the control and evaluation circuit so as to operate as guard electrode. In these cases, the sensitivity of the system may be delimited to the interesting region in front of the backrest and above the seating portion, thereby excluding the risk of false positives caused e.g. by a passenger sitting on a rear seat. In yet another embodiment, the seat frame of said seat or the seat heater integrated in said seating portion or in said backrest is operatively coupled to ground potential so as to operate as shield electrode.

It will be noted that the present invention finds its application e.g. in automotive vehicles, where the information regarding the occupancy of the vehicle seats may be used in a seat belt reminder system of in the control of the secondary restraint systems such of the vehicle as the vehicle airbags or seat belt pretensionners, etc. In a different application, the system of the present invention may e.g. be used in cinemas, theatres, sports stadiums or the like in order to monitor the distribution of seat occupancy and available places.

### Brief Description of the Drawings

Further details and advantages of the present invention will be apparent from the following detailed description of several not limiting embodiments with reference to the attached drawings, wherein::
Fig. 1 is a perspective view of a vehicle seat with an embodiment of an occupant detection system;
Fig. 2 is a side view of the vehicle seat of Fig. 1;
Fig. 3 is a block schematic diagram of a control and evaluation circuit of a detection system;
Fig. 4 and 5 schematically illustrate embodiments of the invention, in which a seat frame is operated as shielding electrode.

### Description of Preferred Embodiments

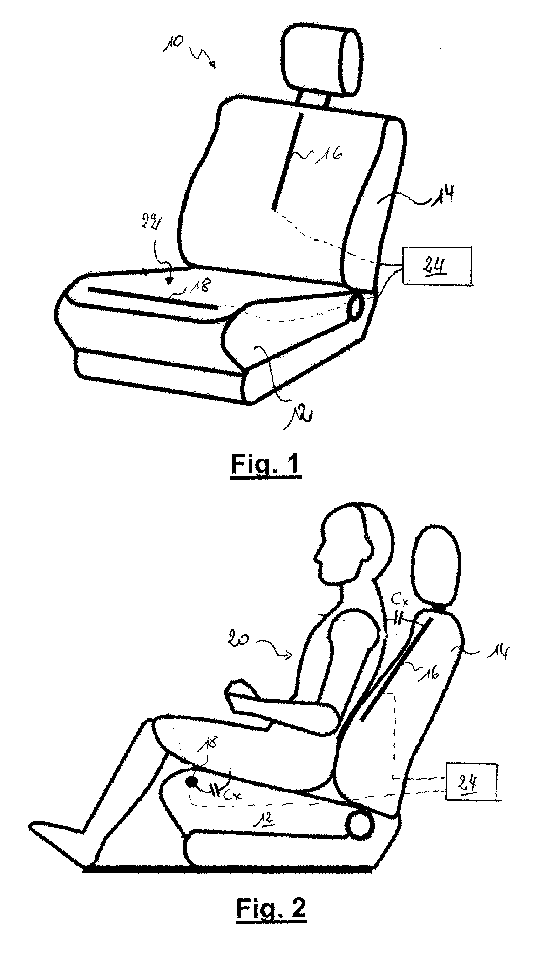

Fig. 1 shows a perspective view of a vehicle seat 10 with associated capacitive occupancy detection system and Fig. 2 shows a side view of the same seat with a person sitting in the seat. The seat 10 comprises a seating portion 12 and a backrest 14, which are both equipped with sensing electrodes 16 and 18 of a capacitive occupancy sensing system. Both sensing electrodes 16 and 18 are preferably wire-based electrodes, i.e. the sensing electrodes preferably consist of a simple conductive wire. Electrode 16 is arranged in an upper portion of the backrest 14, where is sensitive to the thorax of a person 20 all the while being less sensitive to small objects placed on the seating surface 22 of the seating portion 12. In the shown embodiment, electrode 18 is arranged in transverse direction in a front portion of the seating portion. In this location, electrode 18 is sensitive to the thighs of the person 20.

Both electrodes 16 and 18 are schematically represented to be connected to a control and evaluation circuit 24. For illustration purposes the control and evaluation circuit 24 is schematically represented to be located outside the seat in Figs 1 and 2. It is however to be noted, that the control and evaluation circuit 24 can be arranged in the seat 10 or at any other suitable location outside the seat.

The control and evaluation circuit 24 is configured and operatively connected to the electrodes 16 and 18 for determining a parameter representative of the capacitance C_{X} of the electrode, the value of which is depending on the presence or the absence of a passenger 20 on the seat and in the detection range of the sensing system.

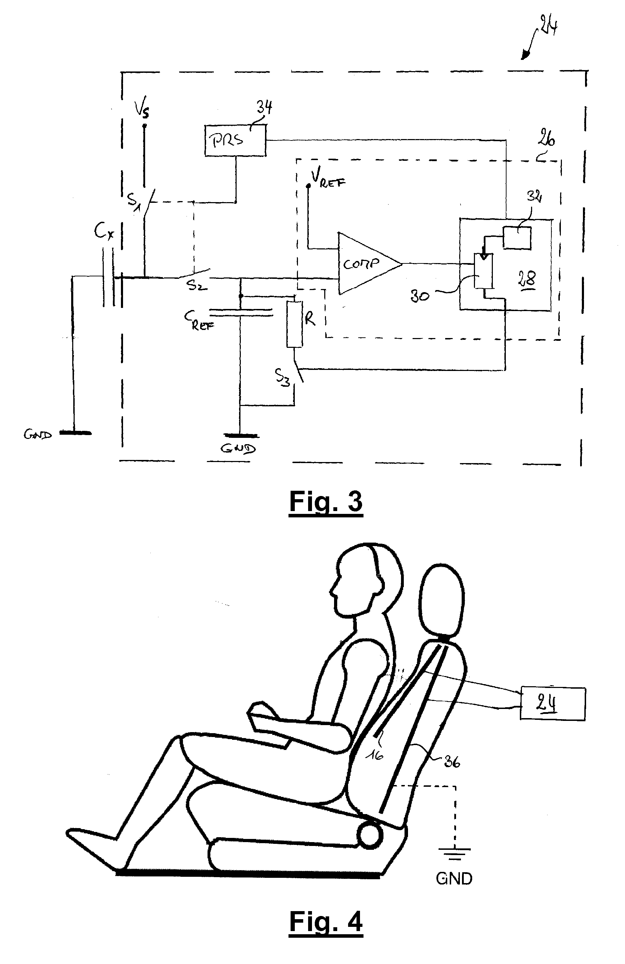

An embodiment of the detection system will now be described with reference to the block schematic diagram of Fig. 3. The control and evaluation circuit 24 comprises a voltage supply for providing a predetermined supply voltage V_{S}, at least one reference capacitor C_{REF} of known capacitance, a first terminal of which being operatively coupled to ground potential GND. A controlled switching arrangement comprising switches S₁ and S₂ is provided and arranged for connecting the electrode 16 or 18 alternately to said voltage supply V_{S} by means of switch S₁ and to the second terminal of said reference capacitor C_{REF} by means of switch S₂. The arrangement and the control of the switches S₁ and S₂ is such that at any time during the operation, at least one of the switches S₁ and S₂ is open. Furthermore an evaluation unit 26 is configured and arranged for determining a parameter representative of the charging behaviour of the reference capacitor. It follows that the charging behaviour of the reference capacitor is directly influenced by the capacitance C_{X} to be determined; a larger capacitance C_{X} resulting in a faster charging of the reference capacitor. It follows that by determining a parameter, which is representative of the charging behaviour of the reference capacitor, the occupancy detection system will be able to distinguish between an empty seat and a seat occupied by a person..

The capacitance C_{X} of electrode 16 or 18 is determined by the repeated charging of the capacitance C_{X} to the supply voltage V_{S} and the subsequent discharging to the reference capacitor C_{REF}. The switches S₁ and S₂ are operated in such a manner, that the reference capacitor C_{REF} is never directly connected to the supply voltage V_{S}. In each switching cycle, the capacitance C_{X} to be determined is charged to the supply voltage V_{S} and thus inputs a charge Q_{X}=V_{S}*C_{X} into the system. After the electrode is disconnected from the supply voltage and connected to the second terminal of the reference capacitor C_{REF}, this charge Q_{X} is partially transferred to the reference capacitor, the portion of the charge to be transferred depending on the value of capacitance C_{X}. Due to the accumulation of charge on the reference capacitor C_{REF}, the voltage at the second terminal of the reference capacitor the increases by an amount which is depending on the quantity of charge transferred and thus again on the value of the capacitance C_{X} to be determined. This operation is repeated until the voltage at the second terminal of the reference capacitor C_{REF} is equal to the predetermined threshold voltage V_{REF}. It will be easily verified by the skilled person, that the number of switching cycles, which is required for the voltage at the second terminal of the reference capacitor to reach the threshold voltage is depending on the value of the capacitance to be determined and may thus be used by a processor unit for determining the capacitance of the electrode or for discriminating between an occupied seat and an empty seat. As described above, other parameters representative of the charging behaviour of the reference capacitor may be the rate at which the voltage at the second terminal of the reference capacitor increases or the voltage at the second terminal of the reference capacitor after a specific number of switching cycles or after a specific time period. In a preferred embodiment, the parameter used for the discrimination of occupancy is the ratio between the length of the discharging intervals and length of the charging interval, which is directly obtained by the duty cycle of the delay block output signal.

The evaluation unit 26 preferably comprises at least one comparator COMP for comparing the voltage at the second terminal of said reference capacitor C_{REF} with said predetermined threshold voltage and for issuing a signal indicative of the result of said comparison. When the voltage V_{CREF} at the second terminal of the reference capacitor C_{REF} reaches the comparator reference voltage V_{REF}, the comparator toggles and this change in the comparator output may trigger i.a. the determination of the capacitance value in an associated decision circuit 28.

In order to reset the system and to enable continuous operation of the system, the control and evaluation circuit 24 further comprises circuit elements for the controlled discharging of said reference capacitor. In the shown embodiment, these circuit elements comprise a series arrangement of a resistor R and a controlled switch S₃ which is connected across the reference capacitor C_{REF}. The switch S₃ may e.g. be controlled by the comparator or as shown by the associated electronic circuit 28. Electronic circuit 28 preferably comprises a delay block 30, which is controlled by a clocked signal from clock 32, and which is operatively connected at the output of the comparator COMP. The delay block 30 makes comparator operation synchronized to the clock signal and thus triggers i.a. the determination of the capacitance value or the occupancy state in the associated decision circuit.

In the shown embodiment of the system, the controlled switch S₃ for discharging the reference capacitor C_{REF} is controlled by the delay block 30 connected to the output of the comparator COMP. The switch S₃ is thus controlled to close after the voltage V_{CREF} at the second terminal of the reference capacitor C_{REF} has exceeded the comparator reference voltage V_{REF} and the delay block 30 has been triggered by the corresponding clock signal. After the switch is closed, the voltage on the reference capacitor decreases until it has fallen below the comparator reference voltage V_{REF} and the delay block 30 has been triggered by the corresponding clock signal. The controlling of the discharge switch S₃ by the delay block 30, which itself is controlled by a preferably low frequency clock signal, thus limits the minimum discharge switch on/off time.

It will be noted that, the discharge switch S₃ is not immediately closed after the voltage V_{CREF} at the reference capacitor C_{REF} reaches the comparator reference voltage V_{REF} but only after the subsequent clock pulse of the delay block clock 32, which triggers the delay block 30 to invert its output. During the time interval between these two incidents, the voltage V_{CREF} at the second terminal of the reference capacitor C_{REF} continues to increase due to the continued operation of the controlled switching arrangement. At the time, the delay block is triggered and the discharge switch is closed, the voltage at the second terminal of the reference capacitor C_{REF} thus has reached a maximum value V_{CREF,max}, which depends on the charging behaviour of the reference capacitor and thus on the capacitance C_{X} to be determined. As stated above, this behaviour influences the time the reference capacitor needs to discharge to a voltage level below the comparator reference voltage V_{REF} and accordoingly the preferred parameter used for the discrimination of occupancy is the ratio between the length of the discharging intervals and length of the charging interval, which is directly obtained by the duty cycle of the delay block output signal.

In the shown preferred embodiment, the controlled switching arrangement comprises at least one pseudo-random sequence generator PRS 34 for generating a pseudo-random sequence for controlling the switching operation of the switches S₁ and S₂. The controlled switching operation therefore does not operate at a fixed period clock source but at pseudo-random time intervals. As a result, the pseudo-random sequence generator provides spread-spectrum operation and ensures good immunity from external noise sources. In addition, designs with the spread-spectrum clock have lower electromagnetic emission levels, which substantially reduces the above mentioned problems for EMC/EMI of the detection system.

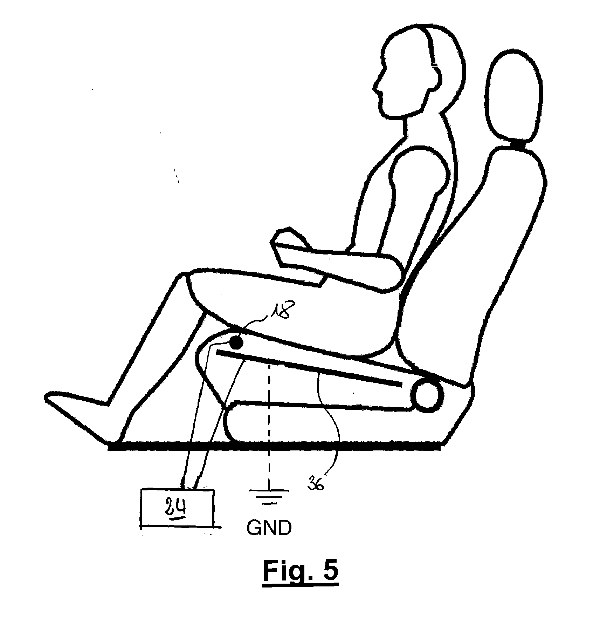

Fig. 4 and 5 schematically illustrate embodiments of the invention, in which a seat frame or chassis 36 or a seat heater 36 integrated in said seating portion or in said backrest is operatively coupled to the control and evaluation circuit 24 so as to operate as guard electrode. Depending on the operation, the seat frame or chassis 36 or a seat heater 36 could also be operatively connected to ground potential and thus operate as a shielding electrode. This is schematically represented by the dashed connection to ground. It should be noted that the elements denoted with reference numeral 36 could also be a dedicated guard electrode, which is associated to hte sensing electrode 16 or 18, and which is operatively coupled to the control and evaluation circuit 24.

## Claims

1. A seat with occupancy detection system, said seat comprising a seating portion and a backrest, and said occupancy detection system comprising
at least one sensing electrode arranged in said seating portion or said backrest,
a control and evaluation circuit operatively coupled to said sensing electrode, said control and evaluation circuit for determining a parameter indicative of the capacitance of said sensing electrode with respect to the surroundings of said electrode, said capacitance being responsive to the presence of absence of an occupant sitting on the seat;
**characterized in that** said control and evaluation circuit comprises
a voltage supply for providing a predetermined supply voltage,
at least one reference capacitor having a first terminal and a second terminal, said first terminal being operatively coupled to ground potential;
a controlled switching arrangement, said switching arrangement being arranged for connecting the at least one sensing electrode alternately to said voltage supply and to the second terminal of said reference capacitor, and
an evaluation unit configured and arranged for determining a parameter representative of the charging behaviour of the reference capacitor.

2. The seat with occupancy detection system as claimed in claim 1, wherein said evaluation unit comprises at least one comparator, said comparator for comparing the voltage at the second terminal of said reference capacitor with said predetermined threshold voltage and for issuing a signal indicative of the result of said comparison.

3. The seat with occupancy detection system as claimed in claim 2, wherein said evaluation unit comprises a delay block, which is controlled by a clocked signal, and which is operatively connected at the output of the comparator.

4. The seat with occupancy detection system as claimed in any one of claims 1 to 3, wherein said control and evaluation circuit further comprises circuit elements for the controlled discharging of said reference capacitor.

5. The seat with occupancy detection system as claimed in claim 4, wherein said circuit elements for the controlled discharging of said reference capacitor are controlled by a delay block, which is controlled by a clocked signal, and which is operatively connected at the output of the comparator.

6. The seat with occupancy detection system as claimed in any one of claims 1 to 5, wherein said controlled switching arrangement comprises at least one pseudo-random sequence generator, said pseudo-random sequence generator for generating a pseudo-random sequence for controlling the switching operation of said controlled switching arrangement.

7. The seat with occupancy detection system as claimed in any one of claims 1 to 6, wherein said at least one sensing electrode is a wire based sensing electrode.

8. The seat with occupancy detection system as claimed in any one of claims 1 to 7, wherein said at least one sensing electrode is arranged in said backrest of said seat.

9. The seat with occupancy detection system as claimed in any one of claims 1 to 8, further comprising at least one guard electrode, said at least one guard electrode being associated to said at least one sensing electrode, said at least one guard electrode being operatively coupled to the control and evaluation circuit.

10. The seat with occupancy detection system as claimed in any one of claims 1 to 9, wherein a seat frame of said seat is operatively coupled to the control and evaluation circuit so as to operate as guard electrode.

11. The seat with occupancy detection system as claimed in any one of claims 1 to 10, wherein a seat heater integrated in said seating portion or in said backrest is operatively coupled to the control and evaluation circuit so as to operate as guard electrode.

12. The seat with occupancy detection system as claimed in any one of claims 1 to 9, wherein a seat frame of said seat or a seat heater integrated in said seating portion or in said backrest is operatively coupled to ground potential so as to operate as shield electrode.
